# EUROPEAN PATENT SPECIFICATION

(11) **EP 3 955 851 B1**
(45) Date of publication and mention of the grant of the patent: **12.06.2024**
(21) Application number: 20716815.4
(22) Date of filing: 09.04.2020
(51) Int. Cl.: A61C 17/028, A61C 17/30, A61C 17/38, A46B 13/06, A46B 9/04, A61C 17/02

(54) **HYDRAULIC DRIVEN BRUSH - INTERDENTAL JET COMBINATION**
HYDRAULISCH ANGETRIEBENE BÜRSTEN-INTERDENTALSTRAHL-KOMBINATION
COMBINAISON DE JET AVEC BROSSE INTERDENTAIRE À COMMANDE HYDRAULIQUE

(30) Priority: 16.04.2019 EP 19169410
(43) Date of publication of application: 23.02.2022
(73) Proprietor: Koninklijke Philips N.V., 5656 AG Eindhoven (NL)
(72) Inventor: GOTTENBOS, Bart, 5656 AE Eindhoven (NL); JOHNSON, Mark, Thomas, Johnson, 5656 AE Eindhoven (NL)
(74) Representative: Philips Intellectual Property & Standards
(86) International application number: PCT/EP2020/060112
(87) International publication number: WO 2020/212238

(56) References cited:
- DE-A1-102007 028 184
- KR-A- 20090 039 131
- KR-A- 20110 129 265
- US-A- 3 480 981
- US-A- 3 771 186
- US-A- 3 909 867
- US-A1- 2004 045 107
- US-B1- 6 220 772
- US-B1- 6 602 071

## Description

### FIELD OF THE INVENTION

The present invention relates to an oral cleaning system for cleaning teeth with a combination of brushing and interdental liquid cleaning.

### BACKGROUND OF THE INVENTION

US 6602071 discloses a handheld cleaning device which includes a cleaning section having discharge and suction ports; and a pump for causing fluid to be discharged through the discharge port of the cleaning section and for simultaneously creating suction at the suction port of the cleaning section.

KR 20110129265 discloses a toothbrush comprising a handle in which an inlet pipe and a discharge pipe are formed; a body in which an impeller is equipped; and a brush unit installed at the bottom of an impeller shaft installed at the impeller. An impeller cover is installed inside the body. In the side of the impeller cover, an inlet hole and a discharge hole are formed. In the bottom of the body, a leak preventing jaw is formed. In the inner lower part of the body, a leakage preventing groove corresponding to the leak preventing jaw is formed.

US3909867 discloses a rotary toothbrush comprising a hand held housing.

US 6602071 discloses a handheld cleaning device includes a cleaning section having discharge and suction ports; and a pump for causing fluid to be discharged through the discharge port of the cleaning section and for simultaneously creating suction at the suction port of the cleaning section. Cleaning is improved by the suction action that draws waste fluid and debris through the space between the teeth and into suction ports.

US 2004045107 discloses a water pressure driven tooth brush with dental jet. This oral cleansing device assembly is an oral hygiene tool, which connects to the water faucet, and uses normal water pressure in the system. This combination, dual mode invention has two modes of operation, tooth brushing and dental jet. In brushing mode, a diverter in a handle channels the water into a water jet impeller driving a tooth brush. In dental jet mode, the diverter channels the water to a jet nozzle. The toothbrush connects to a faucet diverter as a source of water and energy. An impeller is driven by the water pressure, and the water flows out at a connection to the faucets' discharge connection.

KR 20090039131 discloses a rotation and washing toothbrush, which removes the troublesome of use and heightens convenience by implementing rotation function and cleaning function at the same time. The rotation and washing toothbrush comprises: a toothbrush part consisting of the rotating vane which is integrally formed in the upper side of the rotary unit and rotates the rotary unit by the water pressure; a cleaning water path for supplying the high pressure water to the cleaning water space; a water inlet path for supplying the high pressure water to the turning space from the extension part; a pipeline part including the water discharge pipeline for discharging the high pressure water of the turning space to the extension part; a control body which is inserted in order to cover the outer side of the extension part; and a water connection body for ejecting the high pressure water from the water discharge pipeline entrance. In detail, the high-pressure water is supplied from the water pump and supplied to the washing water pipe inlet or the inlet pipe inlet, and is supplied to the inlet pipe inlet and circulated after the water outlet pipe inlet. The high pressure water returned to the roll is returned to the water pump.

Oral diseases such as gum disease or caries are often resulting from poor oral hygiene, people taking insufficient care to remove the dental plaque from their teeth. A particular problem for most is to take good care of the space between the teeth, as it needs additional effort to perform interdental cleaning on top of tooth brushing. Therefore, it would be very advantageous to have the interdental cleaning going on simultaneously while tooth brushing. Many patents are known in the art combining a power toothbrush with an oral irrigation jet, aimed at cleaning the interdental space. It is known that irrigators and micro-droplet devices can perform interdental cleaning and deliver interdental gum health certainly as good as string floss. Therefore, such a combination can indeed be a welcome substitution for the regular power toothbrush. However, development of such a system that delivers all user requirements (e.g. handheld without tethers, compact, reliable) is a complicated technical challenge.

One of the big challenges in the development, manufacturing and reliability of a power toothbrush - oral irrigation combination is combining the mechanical transfer of the power toothbrush head movement and the transfer of the pressurized jet from the device handle to the head. The mechanical system is often heavily influenced by the fluid system and vice versa. Reliability issues often occur at fluidic connections and mechanical interfaces.

The problem becomes even more apparent in a multi-brush concept. While the mechanical energy transfer for a single brush can be relatively simple through a vibratory shaft (e.g. typically used with sonic power brushes), which when hollow can then also be used for liquid transfer, for multi-surface brushes simple vibrational driving from the shaft may not bring sufficient energy into all brushing surfaces. Multi-surface brushes on the market require only for mechanical energy transfer already complicated, prone to failure systems.

The inventors of the present invention identified that it is another important aspect to strongly limit the amount of used fluid. Large liquid volumes represent the following disadvantages: the reservoir and the device gets heavy and bulky and this makes it difficult to handle. The alternative being a tethered solution is also unattractive to many consumers. Further, the amount of fluid in the mouth brings discomfort during use. This results in a need for spitting, splashing liquid, or to keep the mouth open over the sink. In addition, the fluid dilutes the fluoride from the toothpaste thus reducing the anti-caries activity.

To fluid dynamically clean the interdental space not much volume is required. In the state of the art, known devices use 0.6 ml per interdental space and in total 18 ml for 30 interdental spaces. There might be even higher spray velocity settings found where similar efficacy is possible with even half that liquid volume.

In the state of the art, many patents of hydraulic driven toothbrushes in combination with irrigation are known. Such a system limits the handle to head transfer of energy to one modality, which is pressurized liquid only. However, all these patented designs use a water tap connection to supply the hydraulic power.

Such water tap connected solutions have many disadvantages. For most users, this is far too complicated, as it requires a reliable connection to the water tap. Further, the fluid jetting discharge is continuous and therefore would use a lot of water, which brings additional disadvantages as explained above. In addition, the water tap pressure is variable, but most importantly limited to about 2 bar. Useful dental plaque removal only starts above 3 bar, with equivalent efficacy to mechanical floss or interdental brushes a jetting pressure larger than 5 bar, preferably larger than 7 bar is required, especially when using low liquid volumes. Even further, the cleaning is constrained to water, while it can be advantageous to use active agent solutions, for example fluoride solution to counteract the toothpaste dilution by the liquid.

An alternative solution of bringing only mechanical energy into the brush head and having a miniature liquid pump in the head driven by the head motion is also described in the state of the art. As the pump is only small, and brush motion energy limited, this solution can only deliver low energy irrigation, which is not sufficient for a full functionality like string floss.

For all these reasons identified by the inventors of the present invention, it would be advantageous to have an oral cleaning system that combines brushing and interdental liquid cleaning that does not suffer from the above drawbacks.

### SUMMARY OF THE INVENTION

It is an object of the present invention to facilitate oral cleaning with a combination of a hydraulic driven brush and interdental liquid cleaning, which significantly reduces the amount of consumed fluid.

The invention is defined by the independent claim, wherein further embodiments are incorporated in the dependent claims.

The described embodiments similarly pertain to the oral cleaning system for cleaning teeth with a combination of brushing and interdental liquid cleaning. Synergetic effects may arise from different combinations of the embodiments although they might not be described in detail.

The oral cleaning system comprises a cleaning head which uses a combination of brushing and interdental liquid cleaning for cleaning the teeth of a user. The brush is driven to effect a movement of the brush relative to the cleaning head and the oral cleaning system, thereby providing an effective cleaning of the surfaces of a tooth. However, this brush may not reach the interdental spaces between the teeth. Therefore, the cleaning head uses a jet of cleaning fluid emitted through the orifice thereby cleaning the interdental spaces. This cleaning can be just as effective as the use of string floss. The cleaning head is configured to be supplied just with pressurized fluid through a first fluid channel. This fluid drives a hydraulic motor positioned in the cleaning head, which transfers its movement to the brush. At least a part of the fluid can be emitted through the orifice for interdental liquid cleaning. The part of the fluid that was used for empowering the hydraulic motor, but that is not emitted through the orifice, is guided back to a support unit of the oral cleaning system through a second fluid channel in order to be preserved. Thereby, the cleaning head provides an efficient cleaning of the teeth and interdental spaces. The set-up is rather simple, as there is only the need to transport fluid from the support unit to the cleaning head and back again to the support unit. There is no need for additional transmission of mechanical energy in order to drive the brush. Further, the cleaning head saves fluid as only the part of the fluid is emitted, which is needed for interdental cleaning. Thus, an oral cleaning system with a cleaning head according to the invention can be compact and yet provide enough fluid for a complete cleaning session without the need for connecting the oral cleaning system to a water tap. So, in the context of an oral cleaning system comprising a support unit having a fluid reservoir, fluid used for driving the hydraulic motor in the cleaning head is channeled back to the support unit to the extent that it has not been emitted through the cleaning head's orifice for interdental cleaning, so as to achieve an autonomous oral cleaning system that does not need to be connected to an external liquid supply while it is being used, with only a modest-size liquid reservoir.

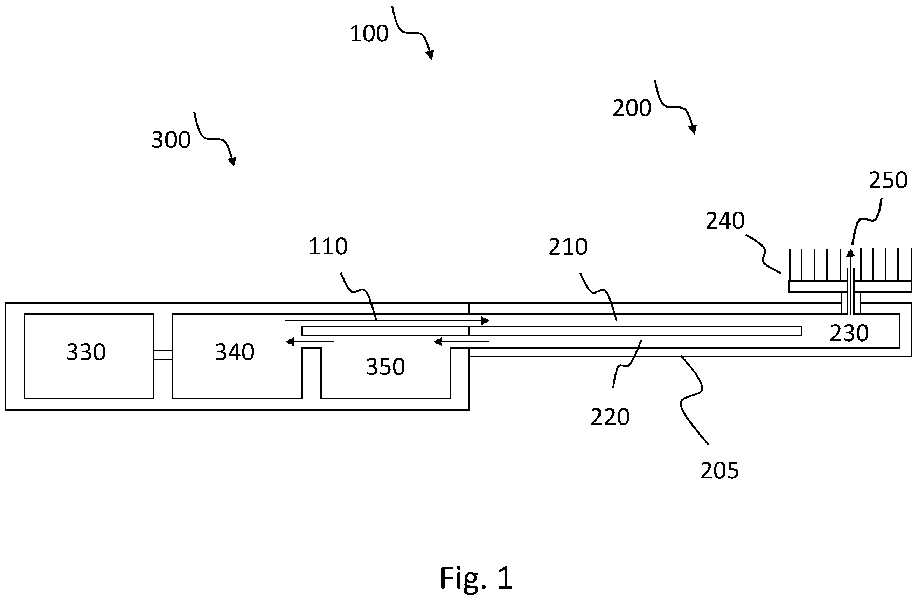

In various embodiments, the cleaning head is combined with and attached to a support unit, such that they build an oral cleaning system. This may easily be gathered from, for example, the embodiment shown in Figure 1 and explained hereinafter in more detail.

The hydraulic motor is configured for driving the brush based on a fluid flow within the first fluid channel of the cleaning head.

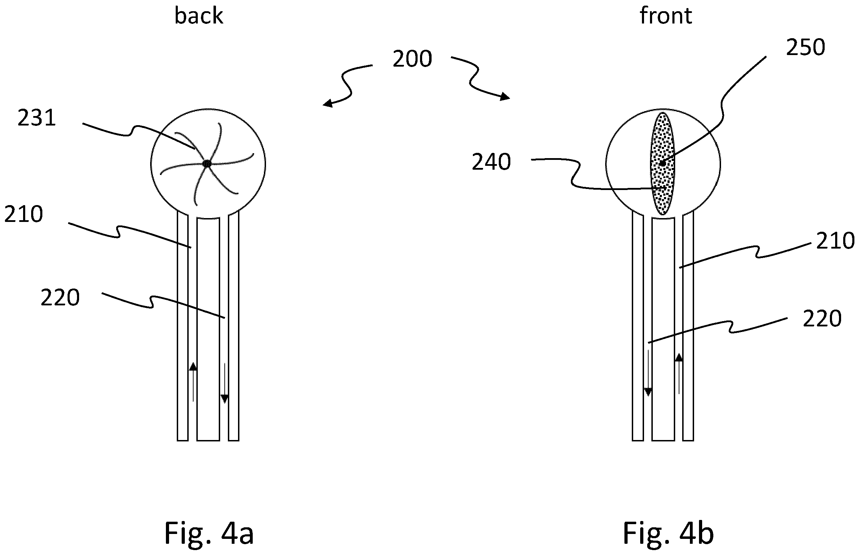

The flow of the fluid in the first fluid channel can be converted to mechanical movement in the cleaning head by means of a hydraulic motor. This hydraulic motor can comprise an impeller or a turbine, which rotates by means of the fluid flow. The rotation of the impeller or the turbine can be directly transmitted to a rotation of the brush. Alternatively, the rotation can be easily converted into an oscillation. The fluid stream can also immediately create side to side oscillations or other motions, depending on the hydraulic motor design. An exemplary embodiment of such a hydraulic motor is shown for example in Figure 4a and will be explained in more detail hereinafter.

In an embodiment of the invention, the cleaning head comprises at least one valve connected to the orifice and configured for allowing a fluid flow through the orifice into interdental space when the valve is in an open configuration.

This valve of the cleaning head can be located in between of the first fluid channel and the orifice. It is configured to be opened or closed thus allowing or stopping the fluid flowing through the orifice; so, the part of the fluid that is emitted through the orifice may be zero if the valve is closed, and in that case, the at least a part of the fluid that is channeled back through the second fluid channel may be all of the fluid that is channeled to the hydraulic motor through the first channel. This valve can allow the desired emission of fluid through the orifice only when the orifice is located opposite to an interdental space. Only at the position of an interdental space the fluid gets released through the orifice, thereby providing a fluid burst cleaning the interdental space. This fluid burst can be preferably a low-volume and high-pressure fluid burst, in order for effective cleaning with a low consumption of cleaning fluid.

Preferably, in an embodiment less than 20 ml is used for the cleaning of all interdental spaces. To dynamically clean the interdental space with fluid not much volume is required. 0.6 ml per interdental space and 18 ml in total for 30 spaces can be sufficient. For cleaning efficacy, a minimal fluid velocity of around 25 m/s is required, which corresponds to ca 3.1 bar in water pressure driven systems. To ensure optimal cleaning 35 to 45 m/s corresponding to ca 6.1 to 10.1 bar is advised when using these minimal fluid bursts. Beyond 50 m/s corresponding to ca 12.5 bar, discomfort and possible soft tissue damage may occur. In order to stay at the preferred fluid volume of 0.6 ml per space, that is 0.3 ml per treatment side (e.g. buccal and lingual), the length of the jet pulse needs to be controlled. Additionally, in a preferred embodiment, the ramp up and ramp down of the jetting velocity occurs instantly, i.e. generating a block pulse fluid jet, so the full volume reaches its maximum cleaning potential. For a perfect block pulse, the used volume V depends on the pulse time t and the average velocity U according to V = A × U × t, where A is the opening area of the orifice. For a typical oral irrigation orifice area A of 0.5 mm² and 40 m/s liquid velocity U, the maximum pulse time t would be limited to 15 ms to create a 0.3 ml shot. However, valve opening time may not always be well controlled, especially not in embodiments that do not electronically control the valve opening. So volumes may increase beyond 20 ml. Area A may be further reduced to reduce the volume use. To still maintain a good cleaning footprint, the fluid may be broken in a spray or spread into fluid sheets. Additionally, the nozzle may move with the brush movement, increasing the fluid impact footprint.

An embodiment as disclosed herein can alternatively be applied in a mouthpiece rather than a 'standard' brush. Thus, the oral cleaning system as disclosed herein could be such a mouthpiece, in which the "cleaning head" is a first component of the mouthpiece, and the "support unit" is a second component of said mouthpiece. Therefore, the support unit in this embodiment is the component of the mouthpiece which comprises the pump mechanism and the fluid reservoir as described herein. In other words, the support unit in this embodiment, which is not part of the invention, would not be held during use by the user, but would be part of the mouthpiece itself which is placed into the mouth for cleaning the teeth with a combination of brushing and interdental liquid cleaning as described herein in detail. The present invention of course applies to the combination of a handle and the cleaning head, as is described in detail in the context of the figures.

In an embodiment of the invention, the valve is located within the hydraulic motor, and the cleaning head is configured for emitting the fluid through the valve, through the orifice and through the brush.

The valve can further be located within the hydraulic motor, thus providing a fluid connection from the fluid within the hydraulic motor to the orifice. In this embodiment, the cleaning head can be configured such that the orifice is located within the brush, thus emitting the fluid through the brush or from in between of the bristles of the brush. This can enable the user of the oral cleaning system to comfortably locate the orifice and its position relative to an interdental space.

In an embodiment of the invention, the oral cleaning system comprises an attachment section, wherein the attachment section is non-detachable from the support unit / the body. In an exemplary embodiment thereof the attachment is carried out by only a bristle plate replacement.

The valve can alternatively be positioned such that it provides the orifice with the pressurized fluid in the first fluid channel, before a pressure of the fluid is reduced by the hydraulic motor. Thus the valve is in direct contact with the maximal pressure of the fluid. This enables the orifice to provide a jet of fluid with optimal pressure. Further, the cleaning head comprises an attachment section, which is configured to be attached to the support unit of the oral cleaning system. This attachment section allows in this embodiment of the invention to attach and to detach the cleaning head from the support unit, for example for purposes of cleaning or replacing the cleaning head. Further, the oral cleaning system can comprise an elongated neck connecting the support unit and the brushing section of the cleaning head. This neck facilitates the handling of the oral cleaning system and the insertion of the brushing section into the mouth of the user. The cleaning head can be configured to provide the attachment section either between support unit and neck or between brushing section and neck. Also the attachment section can be positioned within the neck. For means of replacing or renewing the brush, the brush can also be configured to be detachable from the cleaning head.

In an embodiment of the invention, the cleaning head comprises a sensor for detecting a spatial alignment of an interdental space with the orifice, and the cleaning head is configured for opening the valve when a spatial alignment of an interdental space with the orifice has been detected by the sensor.

In a simple system, the user may actuate the valve opening by for example pressing a button or opening the valve manually when tactile feedback tells him the nozzle is at an interdental space. Therefore, the orifice should not be hidden inside the brush, but should extend sufficiently to get the tactile feedback from the teeth. Alternatively, the brush has a specific tip, giving tactile feedback when being in the interdental space, and the orifice also located at this tip. Interdental liquid cleaning with an automated actuation of the valve can in this embodiment of the invention be enabled by using an appropriate interproximal space sensor. Such sensors can detect for example the larger distance from the sensor or the darker area of the interdental space, or they can sense a gum curvature. This sensor be can for example an optical sensor like a 2D or 3D camera with a recognition software or laser profiling. Further it can be an acoustic sensor for e.g. ultrasonic imaging, a mechanical sensor or any different physical measurement principle being able of detecting a contrast between teeth and interdental spaces. When the sensor detects the interdental space, the valve can be opened for example electrically or hydraulically as by inducing a pressure change by changing the power of a pumping system of the oral cleaning system.

In an embodiment of the invention, the sensor as described herein before is comprised in another part of the oral cleaning system like, for example, the support unit. Thus, the oral cleaning system comprises the sensor for detecting the spatial alignment of an interdental space with the orifice, and the oral cleaning system is configured for opening the valve when a spatial alignment of an interdental space with the orifice has been detected by the sensor. In an embodiment of the invention, the system comprises one or more sensors such as pressure sensors or pump motor power sensors inside the support unit and/or inside the cleaning head.

In an embodiment of the invention, the valve is configured to be opened by a manual, electrical or hydraulic actuator.

There are many different possible valve designs known. They can be actuated in many different ways. For example, a manual actuator, an electric actuator or a hydraulically driven actuator may be used. Further, the valve can be configured to be actuated manually by the user. Manual opening (or e.g. by biting, etc.) would enable a compact valve system, as the electric actuator is not needed, but this is less attractive to users, and may be too complicated for them to perform well. Further, many examples of electric valves are available in the art that may be suitable for use in this embodiment of the invention. The disadvantage of such valves may be the higher costs and complexity of needing electronics in the brush-head part. Additionally, the valve needs to be small being inside the brush-head part of the system. Electronic valves typically are too large for this, so miniaturization would be needed for this application. The size is mostly needed for the motor/ actuator driving the opening of the valve, closing may be done by a spring system. Opening the valve using a hydraulic system of the fluid pressure can be more attractive, as that system is anyway available, and can be very compact. A hydraulic actuator to open the valve can be controlled by hydraulic pressure. Many valve designs are known in the art that need a certain threshold pressure to open, as for example duckbill valves. The valve needing a certain threshold force or pressure to open. When the pressure in the hydraulic system is temporarily increased, the force is high enough to open the valve. When the force drops it would close again, typically using a spring system. The valves could also operate in an inverted way, i.e. being closed during the normal high pressure mode in the hydraulic system, but opened by an elastic or spring force when the pressure drops in the system.

In an embodiment of the invention, the brush is shaped to generate an increased brushing friction according to claim 7.

A cleaning head with a hydraulically driven valve can in this embodiment of the invention be considered without a sensor, when the brush is designed to get an increased friction resistance in an interdental space. Increased friction resistance in an interdental space will, for example, be gained if the bristle trim simulates the concave shape of the interdental space, e.g. with a tapered line of tufts, which are fitting well in this interdental space. Due to a larger contact area of the bristles with the teeth in the interdental space compared to the outside surface of the teeth, the friction of the brush will be larger when at an interdental space. Increasing the friction can be obtaining by giving the brush a particular geometry which makes it partially get stuck between the teeth, and not on the other tooth surfaces. Alternatives are to add only one or two longer bristle tufts which get partially stuck in the interdental space. These tufts could also be of a different material, e.g. rubber sections which can have increased friction when pushed in the interdental space. In an at least partial rotational movement, or in a side-to-side movement of the brush, the friction may additionally be larger than in an up and down movement. The increased friction will increase the back force pushing against the fluid in the hydraulic system, as the hydraulic motor will experience an inhibiting force, which will increase the pressure. The valve can be configured such that this pressure increase exceeds the threshold pressure of the valve, and induces automatic jetting at the interdental space. Preferably, for a more reliable operation, also a pressure sensor can be included in the hydraulic system before the hydraulic motor to detect this pressure change. When the pressure increases due to increased friction, the pressure sensor can induce the pump mechanism to provide an additional ramp-up of the pressure in order to surely effect a proper jet pulse in the interdental space. As alternative to a pressure sensor, the electrical power going into the pump mechanism can be measured, which also increases with a pressure increase. A fluid jet can then be shot by briefly increasing the pressure in the hydraulic system, the pressure exceeding the elastic forces of the valve keeping it closed. When the pressure decreases to a normal brush driving pressure at an outer surface of a tooth, the valve closes again and stops the jetting.

It should be understood the feature of opening the valve "during the increased hydraulic pressure of the fluid" includes also the embodiment where the pressure is sensed in e.g. the support unit and then the opening is triggered in another way, e.g. with an increased pressure pulse. It will be understood by the person skilled in the art that the opening of the valve may thus take place during the time when the increased hydraulic pressure of the fluid is present.

In an embodiment of the invention, the cleaning head further comprises an interdental brush, the interdental brush is configured to brush an entrance of an interdental space, and the interdental brush is configured to be activated by the fluid emitted for interdental liquid cleaning.

In addition to the brush for brushing the teeth, the cleaning head comprises an interdental brush, which is configured to brush preferably an entrance of an interdental space in between the teeth, for example a visible part of interproximal surfaces of neighboring teeth. The emitted fluid of the interdental jet can be used also to actuate this separate brushing element aimed at brushing the interdental space entrance in this embodiment of the invention. At the interdental space a very high pressure burst of fluid is released. Although of a rather small mass the fluid is expelled at a very high velocity thus creating a high momentum. This impulse created by a regular release and removal of the fluid jet can be used to still further induce a brushing motion of the separate interdental brush. The forward momentum of the fluid burst will also induce a backward momentum of the orifice. When the orifice is attached to the movable interdental brush, this brush will therefore start to move. As these jetting events occur in this embodiment of the invention only at interdental spaces, a preferable feature can be to actuate an interdental brush with the fluid burst. The impulse can additionally initiate or enhance a resonant type of motion, increasing the amplitude of the specifically engineered small interdental brush. If repeated bursts are fired the interdental brush may be mounted on a spring that has the resonance frequency of the burst frequency, gaining high amplitudes of the interdental brush.

As has been mentioned herein before, the support unit may be combined with the cleaning head to constitute the oral cleaning system.

The support unit for an oral cleaning system for cleaning teeth with a combination of brushing and interdental liquid cleaning can be attached to the attachment section of the cleaning head such that fluid provided by the support unit is forwarded to the first fluid channel of the cleaning head, and such that fluid received back from the second fluid channel of the cleaning head is preserved in a fluid reservoir of the support unit. For providing the fluid, the support unit comprises a pump mechanism, which is configured to receive fluid from the fluid reservoir and transport the fluid to the first fluid channel of the cleaning head attached to the support unit. In an alternative embodiment, the pump mechanism is configured to receive the fluid from the second fluid channel of the cleaning head and to provide pressurized fluid to a fluid reservoir, which in turn provides the first fluid channel of the cleaning head with pressurized fluid.

Many different pumps are known in the art, and the inventors have found that they can be used in this embodiment of the invention as pump mechanism. Reciprocating pumps, like for example plunger pumps that are typically used in irrigators, deliver a pulsatile pressure, so that the brush movement frequency can vary. This is not necessarily a disadvantage for cleaning, but for user experience a more constant pressure pump may be preferred. Rotary type positive displacement pumps are a preferred choice, as they can be self-priming and have a continuous pressure output. Another advantage of such a rotary pump system is that it can more efficiently drive the hydraulic motor, as the return flow, which has still kinetic energy, can be an input to the pump, thus re-using the remaining energy in a closed loop system. Since the closed loop can lose fluid when shooting in the interdental spaces, the circuit needs to be refilled from the fluid reservoir. This might be a problem in a closed loop system if the pressure is everywhere above atmospheric pressure, as the liquid reservoir will be at atmospheric pressure. To prevent needing another pump to replenish the fluid in the pressurized fluid circuit, a Venturi design can be used.

In an embodiment of the invention, the support unit comprises an energy source for providing the pump mechanism with energy.

Preferably, the pump mechanism is an electrically driven pump, which uses electric power to pump the fluid. As energy source a battery or a rechargeable battery can be used to provide a cordless oral cleaning system as preferred by most users. However, also an electric connection to a wall socket can be possible.

In an embodiment of the invention, the support unit comprises an attachment section, the attachment section comprises a first opening configured to be fluidly connected to the first fluid channel of the cleaning head of the oral cleaning system when the support unit is attached to the cleaning head, and a second opening configured to be fluidly connected to the second fluid channel of the cleaning head of the oral cleaning system when the support unit is attached to the cleaning head.

The attachment section of the support unit is configured to be attached to the attachment section of the cleaning head such that the first fluid channel of the cleaning head is fluidly connected to a first opening of the support unit, and that the second fluid channel of the cleaning head is fluidly connected to a second opening of the support unit. The first opening is configured to provide pressurized fluid from the pump mechanism. The second opening is configured to receive fluid from the second fluid channel and to pass the fluid to on to the fluid reservoir of the support unit.

The support unit is a handle. This handle can be configured to be held in the hand of a user of the oral cleaning system. The user can move the cleaning head relative to the teeth by guiding it by means of the handle.

An advantage of the oral cleaning system compared to the state of the art is for example that a large amount of energy can be transferred from the support unit to the cleaning head using hydraulic fluid, eradicating the need of complicated and prone to failure mechanical energy transfer. The brush can be displaced in all kind of different motions depending on the mechanical design. Further, the hydraulic system brings high-pressure fluid continuously to the cleaning head, which can be easily tapped to create a brief interdental liquid cleaning burst. As the burst is only created at the interdental space, the fluid volume of the fluid reservoir can be limited to below 50 ml, and preferably below 20 ml for a full treatment of all teeth and especially all interdental spaces. Even further, the hydraulic system offers a lot of design freedom to add for example brushes with independent brush motions and even multi-surface brushes. Multi-surface brushes can be provided where a lingual brush moves differently from a buccal/labial brush and again differently from an occlusal brush, optimizing motions for all different tooth surfaces.

In an embodiment of the invention, the oral cleaning system comprises a plurality of cleaning heads according to any of the preceding claims, each of the cleaning heads is configured to clean a separate surface of a tooth, and the oral cleaning system is configured to clean the separate surfaces of the tooth or multiple teeth simultaneously.

An oral cleaning system can be provided, which comprises a plurality of, preferably three, cleaning heads connected to one support unit. This offers the possibility to clean different surfaces of a tooth at the same time with one oral cleaning system. Multi-surface cleaning systems can be provided where a lingual brush moves differently from a buccal/labial brush and again differently from an occlusal brush, optimizing motions for all different tooth surfaces. Hydraulic motors or actuators can be very small, since no magneto-electric components are needed. Therefore, multiple hydraulic motors or actuators could be placed in the brush head driven by a single pump in the support unit, for independent movement of different brushes or brush sections. This gives many advantages of this invention for multi-brush systems. For example, 3 or 6 brush systems can be designed, but also brushes with differently moving sections. Even full dentition brushing mouthpieces using a multitude of brushes can be designed. Further, this enables to use an optimal brushing motion for each tooth section. And it allows for multi-brush flexibility, as the different brushes do not need to be in a rigid connection, needed when mechanically driven on one shaft. This can give a more comfortable feeling to the user, and can improve cleaning because of the better adaptive fit to the individual anatomy in the mouth of a user. Flexibility for user comfort is a big need in such oral cleaning concepts, as the main user complaint of marketed multi-brush systems is the discomfort during use.

Since this embodiment covers also systems for multiple teeth this also includes larger cleaning systems, for example full mouth applications.

In an embodiment of the invention the oral cleaning system comprises two opposing brushes, configured to clamp on the teeth with a certain clamping force, and configured for sensing of the interdental space e.g. by detecting the distance between the brushes or the clamp angle.

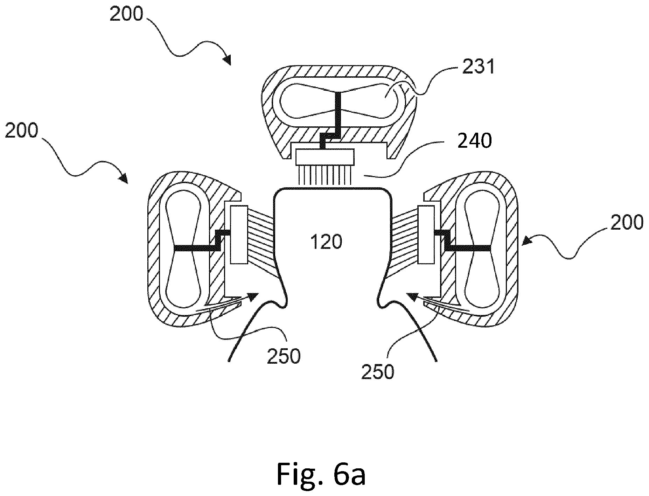

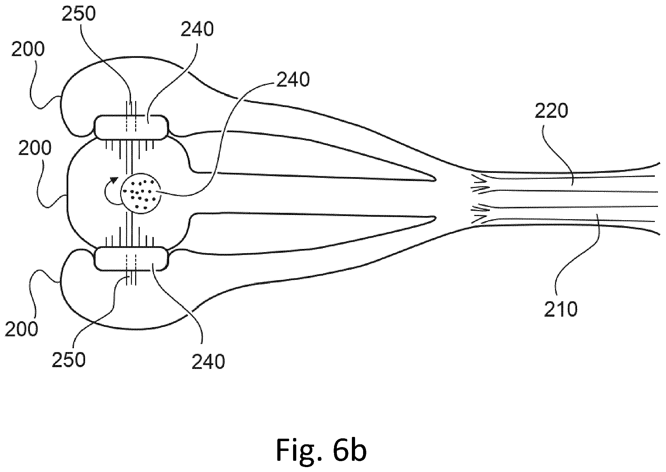

On the side surfaces of the teeth, the two brushes will be further apart, but at an interdental space they are closer together, having a smaller clamp angle. This works best using a narrow vertical brush design, for example a line of tufts. If such a brush is moving, the clamp would start vibrating more heavily in the interdental space, which can also be detected by a vibration sensor, a pressure sensor, or the signal of the electrical power to the pump. Such an embodiment will be described in more detail in the context of the embodiment shown in Figure 6a and 6b.

Advantageously, the benefits provided by any of the above aspects equally apply to all of the other aspects and vice versa.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a schematic set-up of an oral cleaning device according to a first exemplary embodiment of the invention.
Fig. 2 shows a schematic set-up of a cleaning head according to a second exemplary embodiment of the invention.
Fig. 3 shows a schematic set-up of a handle according to a third exemplary embodiment of the invention.
Fig. 4a shows a rear view of a schematic set-up of a cleaning head according to a fourth exemplary embodiment of the invention.
Fig. 4b shows a front view of a schematic set-up of a cleaning head according to the fourth exemplary embodiment of the invention.
Fig. 5 shows a top view of a schematic set-up of a cleaning head according to the fourth exemplary embodiment of the invention while cleaning teeth.
Figs. 6a and 6b show different views of a schematic set-up of a multi-brush oral cleaning system comprising three cleaning heads according to a fifth exemplary embodiment of the invention while cleaning teeth.
Fig. 7 shows a schematic set-up of an interdental brush system with an interdental brush driven by a fluid jet according to a sixth embodiment of the invention.

### DETAILED DESCRIPTION OF EMBODIMENTS

Fig. 1 shows a schematic set-up of an oral cleaning device 100 according to a first exemplary embodiment of the invention. The oral cleaning device comprises a cleaning head 200 and a handle 300. The handle holds the energy source 330, for example batteries, which empower the pump mechanism 340. An electronic circuit can be present to allow the user to control the pump mechanism through buttons for on-off operation, or different power or mode settings. The handle 300 also houses a fluid reservoir, from which fluid flows into the pump, which subsequently pressurizes the fluid through a first liquid channel 210 towards the cleaning head 200. An elongated part, the neck 205, extends from the handle 300 to the cleaning head 200, and allows easy access of the cleaning head 200 into the oral cavity. The neck 205 may be taken off with the cleaning head to replace the cleaning head 200, as it is custom with most power toothbrushes, but it may also be a permanently to the handle 300 connected neck 205, when only the brush 240 itself is replaced. The pressurized fluid 110 powers a hydraulic motor 230, which drives the brushing motion of the brush 240. The motion can have many forms, depending on the design of the movement transition. A typical hydraulic motor 230 will have an impeller 231 that rotates driven by the pressure difference over the impeller 231. The rotation may be directly transferred to the brush 240 thus rotating it, but through different constructions known in the art the rotation could also be transferred to sideway oscillations or even pulsations. The pressure of the fluid 110 is additionally used to drive a fluid burst ejection from the cleaning head 200, aimed at cleaning the interdental spaces 130. Preferably, the amount of fluid 110 used to clean the total of the interdental spaces 130 is limited to no more than 100 ml, but preferably less than 20 ml, so users do not have to spit too much, losing their fluoride from the toothpaste, and being in discomfort. Also volume of the fluid reservoir 350 needs to be small enough to allow easy handling of the toothbrush. One way to achieve low volume use is to limit the fluid bursts to the position of the interdental spaces 130, whereas only some additional shooting might be acceptable. The part of the fluid 100 that is not emitted through the orifice 250 for cleaning the interdental spaces 130 is guided back through a second fluid channel 220 to the handle 300 and received in the fluid reservoir 350.

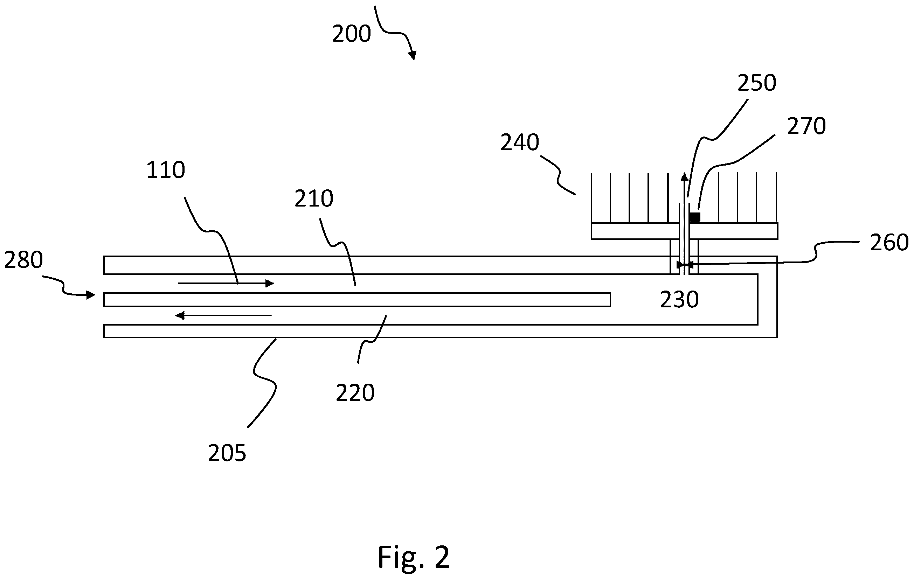

Fig. 2 shows a schematic set-up of a cleaning head 200 according to a second exemplary embodiment of the invention. In this exemplary embodiment, the cleaning head 200 is detached from the handle 300. The attachment section 280 is not connected to a handle 300. Further, the valve 260 is shown, which is configured for allowing the fluid 110 flow through the orifice 250 into interdental space 130 when the valve 260 is in an open configuration. When the valve 260 is closed, all of the fluid 110 used to empower the hydraulic motor 230 is guide back through the second fluid channel 220 to be received by the fluid reservoir 350. Furthermore, a sensor 270 is shown, which is mounted in this exemplary embodiment of the invention to the brush. This sensor 270 is configured to detect a spatial alignment of the cleaning head 200 and in particular of the orifice 250 with an interdental space 130.

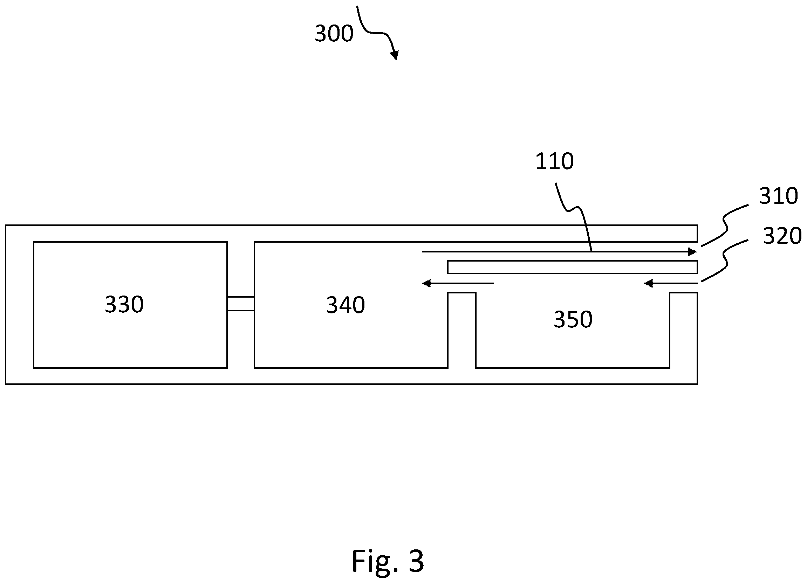

Fig. 3 shows a schematic set-up of a handle 300 according to a third exemplary embodiment of the invention. The handle 300 is shown with no cleaning head 200 attached to the handle 300. Thus the first opening 310 and the second opening 320 are shown in the figure, which are configured to be connected to the first fluid channel 210 and to the second fluid channel 220, respectively. This fluid connection is configured to enable the fluid 110 flow from the pump mechanism 340 of the handle 300 through the first fluid channel 210 to the cleaning head 200, and to enable the fluid 100 flow back from the cleaning head 200 through the second fluid channel 220 into the fluid reservoir 350 of the handle 300.

Fig. 4a shows a rear view of a schematic set-up of a cleaning head 200 according to a fourth exemplary embodiment of the invention. In this rear view, the impeller 231 of the hydraulic motor 230 is shown, which is configured to be driven by the fluid flow from the first fluid channel 210 to the second fluid channel 220.

Fig. 4b shows a front view of a schematic set-up of a cleaning head according to the fourth exemplary embodiment of the invention. The brush 240 is shown, which in this exemplary embodiment of the invention has an elongated shape. The brush is driven by the rotation of the impeller 231 of the hydraulic motor 230, and can for example also be rotating. In the center of the brush 240 located is the orifice 250 for emitting fluid thereby cleaning interdental spaces 130 by means of a fluid jet.

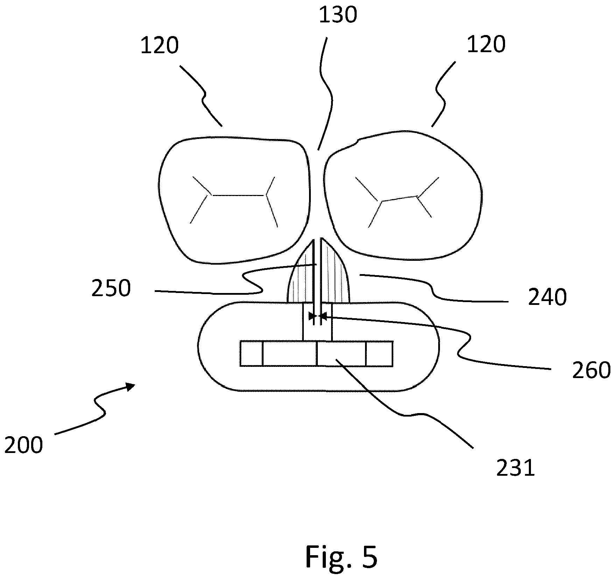

Fig. 5 shows a top view of a schematic set-up of a cleaning head according to the fourth exemplary embodiment of the invention while cleaning teeth. In this top view of the exemplary embodiment of the invention shown also in figures 4a and 4b, the elongated brush 240 of the cleaning head 200 is shown when aligned with an interdental space 130 between two teeth 120. The brush 240 can freely rotate on the outside of the teeth 120, but in the interdental space 130 it can be trapped, increasing the resistance due to friction. By means of the elongated shape of the brush 240, which is fitted to the elongated shape of the entrance of the interdental space 130, a rotation of the brush 240 is obstructed. The rotation of the brush 240 experiences an increased resistance or friction, when the brush is rotated across the interdental space 130. Thus, also the rotation of the impeller 231 of the hydraulic motor 230 is inhibited, which results in a pressure increase of the fluid 110. The increased pressure of the fluid 110 can exceed the threshold of the valve 260 and can be emitted through the orifice 250, thereby cleaning the interdental space 130.

Figs. 6a and 6b show different views of a schematic set-up of a multi-brush oral cleaning system comprising three cleaning heads 200 according to a fifth exemplary embodiment of the invention while cleaning teeth 120. A triple brush system to brush inner, outer and occlusal tooth surfaces is shown, where the three brushes 240 are driven each by a compact hydraulic motor 230. Three tooth surfaces are brushed simultaneously by the brushes 240, and the interdental space 130 is cleaned from both sides by fluid 110 emitted through the orifices 250. Thereby, the treatment time is considerably reduced. The impellers 231 of the hydraulic motors 230 are drawn quite large but may be designed more compact for user comfort, thus reducing also the size of the cleaning heads 200. As the neck of the cleaning heads 200 do not require to transfer mechanical energy, the neck can be relatively flexible, allowing a comfortable adaptation of the cleaning heads 200 to the dentition and a much more comfortable experience using this oral cleaning system. For example, the neck 205 of the occlusal cleaning head can be rigid, which allows the user to control the pressure on the occlusal surfaces, which does not compromise comfort. The inner (lingual) and outer (buccal/labial) cleaning head 200 brushing pressure can be controlled by the spring characteristics of the necks of these cleaning heads 200, which can be chosen freely to optimize both comfort and cleaning. For example, an optimized force of 0.5 to 2 N for each brush 240, depending on the brush size can be provided. This would ensure gum comfort, since the user cannot over pressure the side brushes that touch the gums. The fluid bursts can be emitted from the bottom side of the side brushes, but could also be chosen to eject from the middle when the brush has a hollow brush axis or from the top pointing downward to clean also the sulcus. Also multiple jets can be combined. It can also be beneficial if a burst ejects from the occlusal side, cleaning the interdental space 130 top-down. In this type of oral cleaning system 100 where two opposing brushes 240 clamp on the teeth 120 with a certain clamping force, sensing of the interdental space 130 can also be done by detecting the distance between the brushes 240 or the clamp angle. On the side surfaces of the teeth 120, the two brushes 240 will be further apart, but at an interdental space 130 they are closer together, having a smaller clamp angle. This works best using a narrow vertical brush design, for example a line of tufts. If such a brush 240 is moving, the clamp would start vibrating more heavily in the interdental space 130, which can also be detected by a vibration sensor, a pressure sensor, or the signal of the electrical power to the pump. The first fluid channel 210 and the second fluid channel 220 leading/guiding from and to a handle 300 depicted Fig. 6b can comprise a branching, in order to provide every cleaning head 200 with fluid 110.

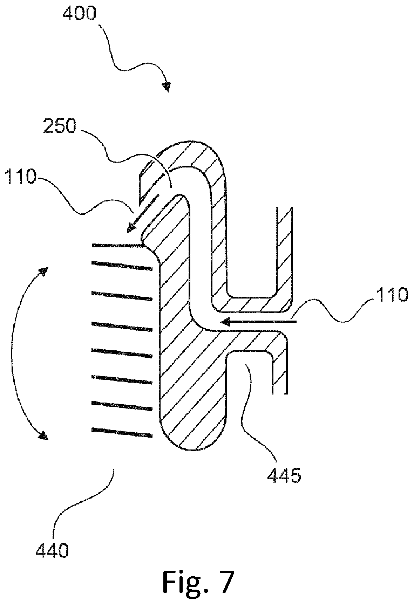

Fig. 7 shows a schematic set-up of an interdental brush system 400 with an interdental brush 440 driven by a fluid jet according to a sixth embodiment of the invention. The interdental brush 440 is mounted on a spring 445 or on a flexible part of a basis of the interdental brush 440. Thus, a resonant movement of the interdental brush 440 is enabled, which will occur when excited by an impulse. A fluid burst can be a hydraulic actuator of the interdental brush 440. As the burst of fluid 110 is ejected from one side of the interdental brush 440 through the orifice 250, the interdental brush 440 will be pushed back or forth, and will vibrate with its resonance frequency. Preferably, this resonant oscillation takes place in a direction along the interdental space, thus providing additional brushing of tooth surfaces at the entrance of the interdental space 130.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 100: oral cleaning system
- 110: fluid
- 120: tooth
- 130: interdental space
- 200: cleaning head
- 205: neck
- 210: first fluid channel
- 220: second fluid channel
- 230: hydraulic motor
- 231: impeller
- 240: brush
- 250: orifice
- 260: valve
- 270: sensor
- 280: attachment section
- 290: interdental brush
- 300: support unit/handle
- 310: first opening
- 320: second opening
- 330: energy source
- 340: pump mechanism
- 350: fluid reservoir
- 400: interdental brush system
- 440: interdental brush
- 445: spring

## Claims

1. Oral cleaning system (100) for cleaning teeth (120) with a combination of brushing and interdental liquid cleaning, comprising a cleaning head (200) and a support unit (300) the support unit comprising a fluid reservoir (350) for containing a fluid (110),
the cleaning head (200)
comprising:
a brush (240) for brushing the teeth (120),
an orifice (250) for emitting a part of the fluid (110) for interdental liquid cleaning,
a hydraulic motor (230) for driving the brush (240); and
a first fluid channel (210) for transporting the fluid (110) from the support unit (300) to the hydraulic motor (230) and the orifice (250), and
a second fluid channel (220) for transporting at least a part of the fluid (110) back from the hydraulic motor (230) to the support unit (300),
wherein the support unit (300) further comprising:
a pump mechanism (340) for pumping the fluid (110) from the fluid reservoir (350) into the first fluid channel (210) of the cleaning head (200),
wherein the support unit (300) is configured for receiving back at least a part of the fluid (110) from the hydraulic motor (230) through the second fluid channel (220) of the cleaning head (200), and for guiding said part of the fluid (110) towards the fluid reservoir (350), and
wherein the support unit (300) is a handle.

2. Oral cleaning system (100) according to claim 1,
wherein the hydraulic motor (230) is configured for driving the brush (240) based on a fluid flow within the first fluid channel (210) of the cleaning head (200).

3. Oral cleaning system (100) according to any of claims 1 or 2,
wherein the cleaning head (200) comprises at least one valve (260) connected to the orifice (250) and configured for allowing a fluid (110) flow through the orifice (250) into interdental space (130) when the valve (260) is in an open configuration.

4. Oral cleaning system (100) according to claim 3,
wherein the valve (260) is located within the hydraulic motor (230), and
wherein the cleaning head (200) is configured for emitting the fluid (110) through the valve (260), through the orifice (250) and through the brush (240).

5. Oral cleaning system (100) according to claim 3 or 4,
wherein the cleaning head (200) comprises a sensor (270) for detecting a spatial alignment of an interdental space (130) with the orifice (250), and
wherein the cleaning head (200) is configured for opening the valve (260) when a spatial alignment of an interdental space (130) with the orifice (250) has been detected by the sensor (270).

6. Oral cleaning system (100) according to any of claims 3 to 5,
wherein the valve (260) is configured to be opened by a manual, electrical or hydraulic actuator.

7. Oral cleaning system (100) according to claim 3 or 4,
wherein the brush (240) is shaped to generate an increased brushing friction when brushing an interdental space (130) through the brush having either:
one or two longer bristle tufts; or
a bristle trim that simulates the concave shape of the interdental space;
thereby generating an increased hydraulic pressure of the fluid (110) in the first fluid channel (210), and
wherein the valve (260) is configured to be opened during the increased hydraulic pressure of the fluid (110).

8. Oral cleaning system (100) according to any of the preceding claims,
wherein the cleaning head (200) further comprises an interdental brush (290),
wherein the interdental brush (290) is configured to brush an entrance of an interdental space (130), and
wherein the interdental brush (290) is configured to be activated by the fluid (110) emitted for interdental liquid cleaning.

9. Oral cleaning system (100) according to claim 1 wherein the support unit (300) is configured for receiving back at least a part of the fluid (110) from the hydraulic motor (230) through the second fluid channel (220) of the cleaning head (200), and for guiding said part of the fluid (110) directly towards a pump inlet of the pump mechanism.

10. Oral cleaning system (100) according to claim 1,
wherein the support unit (300) comprises an energy source (330) for providing the pump mechanism (340) with energy.

11. Oral cleaning system (100) according to claim 1 or 9,
wherein the support unit (300) comprises an attachment section,
wherein the attachment section comprises
- a first opening (310), configured to be fluidly connected to the first fluid channel (210) of the cleaning head (200) when the support unit (300) is attached to the cleaning head (200), and
- a second opening (320) configured to be fluidly connected to the second fluid channel (220) of the cleaning head (200) when the support unit (300) is attached to the cleaning head (200).

12. Oral cleaning system (100) according to claim 1,
wherein the oral cleaning system (100) comprises a plurality of said cleaning heads (200), wherein each of the cleaning heads (200) is configured to clean a separate surface of a tooth (120), and
wherein the oral cleaning system (100) is configured to clean the separate surfaces of the tooth or multiple teeth (120) simultaneously.

## Patentansprüche

1. Mundreinigungssystem (100) zum Reinigen von Zähnen (120) mit einer Kombination aus Bürsten- und interdentaler Flüssigkeitsreinigung, umfassend einen Reinigungskopf (200) und eine Unterstützungseinheit (300), wobei die Unterstützungseinheit ein Fluidreservoir (350) zum Aufbewahren eines Fluids (110) umfasst,
wobei der Reinigungskopf (200) Folgendes umfasst:
eine Bürste (240) zum Bürsten der Zähne (120),
eine Mündung (250) zum Abgeben eines Teils des Fluids (110) zur interdentalen Flüssigkeitsreinigung,
einen Hydraulikmotor (230) zum Antreiben der Bürste (240); und
einen ersten Fluidkanal (210) zum Transportieren des Fluids (110) von der Unterstützungseinheit (300) zu dem Hydraulikmotor (230) und der Mündung (250) und
einen zweiten Fluidkanal (220) zum Transportieren von mindestens einem Teil des Fluids (110) von dem Hydraulikmotor (230) zurück zu der Unterstützungseinheit (300),
wobei die Unterstützungseinheit (300) weiter Folgendes umfasst:
einen Pumpmechanismus (340) zum Pumpen des Fluids (110) aus dem Fluidreservoir (350) in den ersten Fluidkanal (210) des Reinigungskopfs (200),
wobei die Unterstützungseinheit (300) zum Wiederempfangen mindestens eines Teils des Fluids (110) von dem Hydraulikmotor (230) durch den zweiten Fluidkanal (220) des Reinigungskopfs (200) hindurch und zum Leiten des Teils des Fluids (110) hin zu dem Fluidreservoir (350) konfiguriert ist, und
wobei die Unterstützungseinheit (300) ein Griff ist.

2. Mundreinigungssystem (100) nach Anspruch 1,
wobei der Hydraulikmotor (230) zum Antreiben der Bürste (240) basierend auf einem Fluidstrom innerhalb des ersten Fluidkanals (210) des Reinigungskopfs (200) konfiguriert ist.

3. Mundreinigungssystem (100) nach einem der Ansprüche 1 oder 2,
wobei der Reinigungskopf (200) mindestens ein Ventil (260) umfasst, das mit der Mündung (250) verbunden und dazu konfiguriert ist, einem Fluid (110) zu ermöglichen, durch die Mündung (250) hindurch in einen Interdentalraum (130) zu strömen, wenn sich das Ventil (260) in einer offenen Konfiguration befindet.

4. Mundreinigungssystem (100) nach Anspruch 3,
wobei sich das Ventil (260) innerhalb des Hydraulikmotors (230) befindet und
wobei der Reinigungskopf (200) zum Abgeben des Fluids (110) durch das Ventil (260) hindurch, durch die Mündung (250) hindurch und durch die Bürste (240) hindurch konfiguriert ist.

5. Mundreinigungssystem (100) nach Anspruch 3 oder 4,
wobei der Reinigungskopf (200) einen Sensor (270) zum Detektieren einer räumlichen Ausrichtung eines Interdentalraums (130) mit der Mündung (250) umfasst und
wobei der Reinigungskopf (200) zum Öffnen des Ventils (260) konfiguriert ist, wenn eine räumliche Ausrichtung eines Interdentalraums (130) mit der Mündung (250) durch den Sensor (270) detektiert wurde.

6. Mundreinigungssystem (100) nach einem der Ansprüche 3 bis 5,
wobei das Ventil (260) dazu konfiguriert ist, durch einen manuellen, elektrischen oder hydraulischen Aktuator geöffnet zu werden.

7. Mundreinigungssystem (100) nach Anspruch 3 oder 4,
wobei die Bürste (240) dazu geformt ist, beim Bürsten eines Interdentalraums (130) eine erhöhte Bürstenreibung dadurch zu erzeugen, dass die Bürste eines von Folgendem aufweist: ein oder zwei längere Borstenbüschel; oder
ein Borstentrimm, der die konkave Form des Interdentalraums simuliert;
wodurch ein erhöhter hydraulischer Druck des Fluids (110) in dem ersten Fluidkanal (210) erzeugt wird, und
wobei das Ventil (260) dazu konfiguriert ist, während des erhöhten hydraulischen Drucks des Fluids (110) geöffnet zu werden.

8. Mundreinigungssystem (100) nach einem der vorstehenden Ansprüche,
wobei der Reinigungskopf (200) weiter eine Interdentalbürste (290) umfasst,
wobei die Interdentalbürste (290) dazu konfiguriert ist, einen Eingang eines Interdentalraums (130) zu bürsten, und
wobei die Interdentalbürste (290) dazu konfiguriert ist, durch das zur interdentalen Flüssigkeitsreinigung abgegebene Fluid (110) aktiviert zu werden.

9. Mundreinigungssystem (100) nach Anspruch 1, wobei die Unterstützungseinheit (300) zum Wiederempfangen mindestens eines Teils des Fluids (110) von dem Hydraulikmotor (230) durch den zweiten Fluidkanal (220) des Reinigungskopfs (200) hindurch und zum Leiten des Teils des Fluids (110) direkt hin zu einem Pumpeneinlass des Pumpmechanismus konfiguriert ist.

10. Mundreinigungssystem (100) nach Anspruch 1,
wobei die Unterstützungseinheit (300) eine Energiequelle (330) zum Bereitstellen von Energie an den Pumpmechanismus (340) umfasst.

11. Mundreinigungssystem (100) nach Anspruch 1 oder 9,
wobei die Unterstützungseinheit (300) einen Anbringungsabschnitt umfasst,
wobei der Anbringungsabschnitt Folgendes umfasst
- eine erste Öffnung (310), die dazu konfiguriert ist, mit dem ersten Fluidkanal (210) des Reinigungskopfs (200) fluidverbunden zu sein, wenn die Unterstützungseinheit (300) an dem Reinigungskopf (200) angebracht ist, und
- eine zweite Öffnung (320), die dazu konfiguriert ist, mit dem zweiten Fluidkanal (220) des Reinigungskopfs (200) fluidverbunden zu sein, wenn die Unterstützungseinheit (300) an dem Reinigungskopf (200) angebracht ist.

12. Mundreinigungssystem (100) nach Anspruch 1,
wobei das Mundreinigungssystem (100) eine Vielzahl der Reinigungsköpfe (200) umfasst, wobei jeder der Reinigungsköpfe (200) dazu konfiguriert ist, eine separate Fläche eines Zahns (120) zu reinigen, und
wobei das Mundreinigungssystem (100) dazu konfiguriert ist, die separaten Flächen des Zahns oder mehrerer Zähne (120) gleichzeitig zu reinigen.

## Revendications

1. Système de nettoyage buccal (100) pour le nettoyage des dents (120) par une combinaison de brossage et de nettoyage interdentaire liquide, comprenant une tête de nettoyage (200) et une unité de support (300), l'unité de support comprenant un réservoir de fluide (350) pour contenir un fluide (110),
la tête de nettoyage (200) comprenant :
une brosse (240) pour brosser les dents (120),
un orifice (250) pour émettre une partie du fluide (110) pour le nettoyage interdentaire liquide,
un moteur hydraulique (230) pour entraîner la brosse (240) ; et
un premier canal de fluide (210) pour transporter le fluide (110) de l'unité de support (300) au moteur hydraulique (230) et à l'orifice (250), et
un second canal de fluide (220) pour transporter au moins une partie du fluide (110) à nouveau depuis le moteur hydraulique (230) vers l'unité de support (300),
dans lequel l'unité de support (300) comprend en outre :
un mécanisme de pompe (340) pour pomper le fluide (110) du réservoir de fluide (350) dans le premier canal de fluide (210) de la tête de nettoyage (200),
dans lequel l'unité de support (300) est configurée pour recevoir en retour au moins une partie du fluide (110) provenant du moteur hydraulique (230) à travers le second canal de fluide (220) de la tête de nettoyage (200), et pour guider ladite partie du fluide (110) vers le réservoir de fluide (350), et
dans lequel l'unité de support (300) est une poignée.

2. Système de nettoyage buccal (100) selon la revendication 1,
dans lequel le moteur hydraulique (230) est configuré pour entraîner la brosse (240) sur la base d'un écoulement de fluide dans le premier canal de fluide (210) de la tête de nettoyage (200).

3. Système de nettoyage buccal (100) selon l'une quelconque des revendications 1 ou 2,
dans lequel la tête de nettoyage (200) comprend au moins une soupape (260) reliée à l'orifice (250) et configurée pour permettre à un fluide (110) de s'écouler à travers l'orifice (250) dans l'espace interdentaire (130) lorsque la soupape (260) est dans une configuration ouverte.

4. Système de nettoyage buccal (100) selon la revendication 3,
dans lequel la soupape (260) est située à l'intérieur du moteur hydraulique (230), et
dans lequel la tête de nettoyage (200) est configurée pour émettre le fluide (110) à travers la soupape (260), à travers l'orifice (250) et à travers la brosse (240).

5. Système de nettoyage buccal (100) selon la revendication 3 ou 4,
dans lequel la tête de nettoyage (200) comprend un capteur (270) pour détecter un alignement spatial d'un espace interdentaire (130) avec l'orifice (250), et
dans lequel la tête de nettoyage (200) est configurée pour ouvrir la soupape (260) lorsqu'un alignement spatial d'un espace interdentaire (130) avec l'orifice (250) a été détecté par le capteur (270).

6. Système de nettoyage buccal (100) selon l'une quelconque des revendications 3 à 5,
dans lequel la soupape (260) est configurée pour être ouverte par un actionneur manuel, électrique ou hydraulique.

7. Système de nettoyage buccal (100) selon la revendication 3 ou 4,
dans lequel la brosse (240) est formée pour générer un frottement de brossage accru lors du brossage d'un espace interdentaire (130) par l'intermédiaire de la brosse présentant soit : une ou deux touffes de poils plus longues ; soit
une garniture de poils qui simule la forme concave de l'espace interdentaire ; générant ainsi une augmentation de pression hydraulique du fluide (110) dans le premier canal de fluide (210), et
dans lequel la soupape (260) est configurée pour être ouverte lors de l'augmentation de pression hydraulique du fluide (110).

8. Système de nettoyage buccal (100) selon l'une quelconque des revendications précédentes,
dans lequel la tête de nettoyage (200) comprend en outre une brosse interdentaire (290),
dans lequel la brosse interdentaire (290) est configurée pour brosser une entrée d'un espace interdentaire (130), et
dans lequel la brosse interdentaire (290) est configurée pour être activée par le fluide (110) émis pour le nettoyage interdentaire liquide.

9. Système de nettoyage buccal (100) selon la revendication 1, dans lequel l'unité de support (300) est configurée pour recevoir en retour au moins une partie du fluide (110) provenant du moteur hydraulique (230) à travers le second canal de fluide (220) de la tête de nettoyage (200), et pour guider ladite partie du fluide (110) directement vers une entrée de pompe du mécanisme de pompe.

10. Système de nettoyage buccal (100) selon la revendication 1,
dans lequel l'unité de support (300) comprend une source d'énergie (330) pour fournir de l'énergie au mécanisme de pompe (340).

11. Système de nettoyage buccal (100) selon la revendication 1 ou 9,
dans lequel l'unité de support (300) comprend une section de fixation,
dans lequel la section de fixation comprend
- une première ouverture (310), configurée pour être reliée fluidiquement au premier canal de fluide (210) de la tête de nettoyage (200) lorsque l'unité de support (300) est fixée à la tête de nettoyage (200), et
- une seconde ouverture (320), configurée pour être reliée fluidiquement au second canal de fluide (220) de la tête de nettoyage (200) lorsque l'unité de support (300) est fixée à la tête de nettoyage (200).

12. Système de nettoyage buccal (100) selon la revendication 1,
dans lequel le système de nettoyage buccal (100) comprend une pluralité desdites têtes de nettoyage (200), dans lequel chacune des têtes de nettoyage (200) est configurée pour nettoyer une surface distincte d'une dent (120), et
dans lequel le système de nettoyage buccal (100) est configuré pour nettoyer simultanément les surfaces distinctes de la dent ou de multiples dents (120).
